# EUROPEAN PATENT APPLICATION

(11) **EP 4 734 335 A1**
(43) Date of publication of application: **29.04.2026**
(21) Application number: 24933179.4
(22) Date of filing: 27.08.2024
(51) Int. Cl.: H02K 5/16, H02K 5/24, H02K 7/14, H02K 9/06, A47L 9/22

(54) **MOTOR**

(71) Applicant: LG ELECTRONICS INC., Yeongdeungpo-gu Seoul 07336 (KR)
(72) Inventor: KANG, Joohang, Seoul 08592 (KR); KIM, Yongdae, Seoul 08592 (KR); HA, Hyeonho, Seoul 08592 (KR)
(74) Representative: Vossius & Partner Patentanwälte Rechtsanwälte mbB
(86) International application number: PCT/KR2024/012761
(87) International publication number: WO 2026/049078

(57) **Abstract**

Provided is a motor. According to one aspect of the present disclosure, a motor includes: a first bearing a first bearing coupled to the housing; a rotational shaft rotatably coupled to the first bearing; a rotor coupled to the rotational shaft and placed axially below the first bearing; a stator assembly placed at a radial outer side of the rotor; an impeller coupled to the rotational shaft and placed axially below the rotor; a diffuser coupled to the housing and placed axially below the impeller; a second bearing, which is coupled to a central region of the diffuser and to which the rotational shaft is rotatably coupled; a bearing holder placed between the first bearing and the housing in a direction perpendicular to an axial direction; and an elastic member placed between the bearing holder and the housing in the axial direction, and the diffuser includes a plurality of diffuser ribs that extend downward on a lower surface.

## Description

### [Technical Field]

The present disclosure relates to a motor, and more particularly, to a motor for a cleaner that performs cleaning by sucking or wiping off dust or foreign materials of a cleaning target region.

### [Background Art]

In general, a vacuum cleaner is a household appliance that sucks foreign materials such as dust and collects the sucked foreign materials in a separate collection unit installed inside a body.

Specifically, a high suction force is required for the vacuum cleaner to effectively suck the foreign materials, and an intensity of the suction force is proportional to a rotational force of a motor. That is, the higher the rotational force of the motor, the higher a rotational speed of a fan connected to the motor, thereby increasing a suction force applied to the foreign materials.

In general, a motor for a vacuum as a device that obtains rotational force from electrical energy includes a stator and a rotor. The rotor can be rotated by an electromagnetic interaction with the stator.

A conventional motor for a cleaner includes a rotational shaft that rotates with the rotor, an impeller coupled to the rotational shaft, a first housing that supports the stator, and a second housing that encloses the impeller.

In this case, the motor for the cleaner has a cantilever structure in which the stator is placed between a first bearing and a second bearing, and the impeller is placed axially below the second bearing, so that secondary press-fitting of a rotational shaft for securing a predetermined gap between the impeller and the second housing is impossible.

As a result, there is a problem in that interference occurs between the impeller and the second housing during high-speed rotation of the impeller.

### [Disclosure]

### [Technical Problem]

An object to be achieved by the present disclosure is to provide a motor capable of vertically moving a bearing and a rotational shaft in a state in which outward preloads are formed on both sides of a first bearing and a second bearing in an axial direction.

Further, an object to be achieved by the present disclosure is to provide a motor that may secure reliability because an accurate gap between a second housing and an impeller may be set.

In addition, an object to be achieved by the present disclosure is to provide a motor that maintains an alignment between bearings due to an arching effect of an elastic member in a state of maintaining a balance of a rotor, thereby increasing a service life of the bearing.

In addition, an object to be achieved by the present disclosure is to provide a motor which has a both-end support structure in which an impeller is located between two bearings, and thus noise generated by rotor rotation may be reduced.

In addition, an object to be achieved by the present disclosure is to provide a motor that reduces axial vibration of a rotational shaft to reduce vibration noise and increase a critical value of a dangerous speed.

Further, an object to be achieved by the present disclosure is to provide a motor that reduces a vibration amount of the housing, and move a resonance point of a bending mode of the housing caused by a shape of the housing when the rotational shaft rotates, so as to raise the critical value of the dangerous speed.

### [Technical Solution]

In order to achieve the object, according to one aspect of the present disclosure, a motor includes: a housing; a first bearing a first bearing coupled to the housing; a rotational shaft rotatably coupled to the first bearing; a rotor coupled to the rotational shaft and placed axially below the first bearing; a stator assembly placed at a radial outer side of the rotor; an impeller coupled to the rotational shaft and placed axially below the rotor; a diffuser coupled to the housing and placed axially below the impeller; a second bearing, which is coupled to a central region of the diffuser and to which the rotational shaft is rotatably coupled; a bearing holder placed between the first bearing and the housing in a direction perpendicular to an axial direction; and an elastic member placed between the bearing holder and the housing in the axial direction.

Accordingly, it is possible to vertically move a bearing and a rotational shaft in a state in which outward preloads are formed on both sides of a first bearing and a second bearing in an axial direction.

Further, since an accurate gap between the second housing and the impeller may be set, reliability may be ensured.

Moreover, by maintaining an alignment between bearings due to an arching effect of an elastic member in a state of maintaining a balance of a rotor, a service life of the bearing may be increased.

In addition, the motor has a both-end support structure in which an impeller is located between two bearings, and thus noise generated by rotor rotation may be reduced.

The diffuser may include a plurality of diffuser ribs that extend downward on a lower surface.

As a result, axial vibration of a rotational shaft is reduced to reduce vibration noise and increase a critical value of a dangerous speed.

The impeller may be located downstream of a flow path generated by rotation of the impeller.

Further, the plurality of diffuser ribs may include a plurality of first diffuser ribs that extend in a radial direction and are spaced apart from each other in a circumferential direction.

In addition, a height of a radial inner region of the first diffuser rib may be larger than a height of a radial outer region.

Further, a lower surface of the first diffuser rib may be perpendicular to the rotational shaft.

In addition, the plurality of diffuser ribs may include second diffuser ribs that extend in the circumferential direction, and connect radial inner ends of the plurality of first diffuser ribs.

In addition, the plurality of diffuser ribs may include third diffuser ribs that extend in the circumferential direction, and connect the plurality of first diffuser ribs, and the third diffuser rib may be spaced apart from the second diffuser rib in the radial direction.

Further, the housing may include a first housing, and a second housing enclosing the impeller and coupled to the first housing, the second housing may include an upper region, and a lower region placed axially below the upper region, a lower portion of the upper region may have an outer diameter which decreases downward in the axial direction, and an upper portion of the lower region may have an outer diameter which decreases upward in the axial direction.

In this case, the motor may further include a plurality of first housing ribs that are projected radially outward in the lower portion of the upper region and the upper portion of the lower region, and are spaced apart from each other in the circumferential direction.

As a result, a vibration amount of the housing may be reduced, and a resonance point of a bending mode of the housing caused by a shape of the housing is moved when the rotational shaft rotates, so as to raise the critical value of the dangerous speed of the motor.

The plurality of first housing ribs may include vertical ribs of which outer surfaces are parallel to the rotational shaft.

Further, the second housing may include a coupling portion that extends axially upward in the upper region and is coupled to the first housing, and the plurality of first housing ribs may include inclination ribs formed in a region overlapped with the coupling portion in the axial direction.

In addition, an outer surface of the inclination rib may be inclined to be placed at a radial outer side downward axially.

In addition, an outer surface of the first housing rib may be placed radially inward of an outermost surface of the second housing.

Further, the motor may further include second housing ribs that extend in the circumferential direction and connect the plurality of first housing ribs.

### [Advantageous Effects]

According to the present disclosure, a motor can be provided, which can vertically move a bearing and a rotational shaft in a state in which outward preloads are formed on both sides of a first bearing and a second bearing in an axial direction.

Further, according to the present disclosure, a motor can be provided, which secures reliability because an accurate gap between a second housing and an impeller may be set.

In addition, according to the present disclosure, a motor can be provided, which maintains an alignment between bearings due to a wrap effect of an elastic member in a state of maintaining a balance of a rotor, thereby increasing a duration life of the bearing.

In addition, according to the present disclosure, it is possible to provide a motor which has a both-end support structure in which an impeller is located between two bearings, and thus noise generated by rotor rotation may be reduced.

In addition, according to the present disclosure, it is possible to provide a motor that reduces axial vibration of a rotational shaft to reduce vibration noise and increase a critical value of a dangerous speed.

Further, according to the present disclosure, it is possible to provide a motor that reduces a vibration amount of the housing, and move a resonance point of a bending mode of the housing caused by a shape of the housing when the rotational shaft rotates, so as to raise the critical value of the dangerous speed.

### [Description of Drawings]

FIG. 1 is a perspective view of a motor according to an embodiment of the present disclosure.
FIG. 2 is an exploded perspective view of the motor according to an embodiment of the present disclosure.
FIG. 3 is a cross-sectional view of the motor according to an embodiment of the present disclosure.
FIG. 4 is a perspective view of a second housing of the motor according to an embodiment of the present disclosure.
FIG. 5 is a diagram illustrating a bending mode of a housing of the motor according to an embodiment of the present disclosure.
FIG. 6 is a diagram illustrating a frequency of the housing according to a rotational speed of an impeller when there is no rib.
FIG. 7 is a diagram illustrating the frequency of the housing according to the rotational speed of the impeller according to an embodiment of the present disclosure.
FIG. 8 is a perspective view of a modified example of the motor according to an embodiment of the present disclosure.
FIG. 9 is a perspective view of a diffuser of the motor according to an embodiment of the present disclosure.
FIG. 10 is a diagram illustrating an axial excitation mode of the housing of the motor according to an embodiment of the present disclosure.
FIG. 11 is a diagram illustrating the frequency of the housing according to the rotational speed of the impeller according to an embodiment of the present disclosure.

### [Mode for Invention]

Hereinafter, some embodiments of the present disclosure will be described in detail with reference to exemplary drawings. It should be noted that, when components in each drawing are denoted by reference numerals, the same components are denoted by the same numerals as much as possible even if they are displayed in different drawings. Further, in describing the embodiments of the present disclosure, a detailed description of a related known configuration or function is omitted when it is determined that the detailed description interferes with an understanding of the embodiment of the present disclosure.

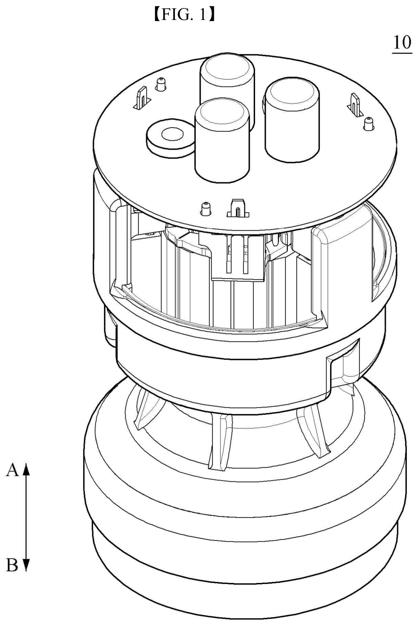

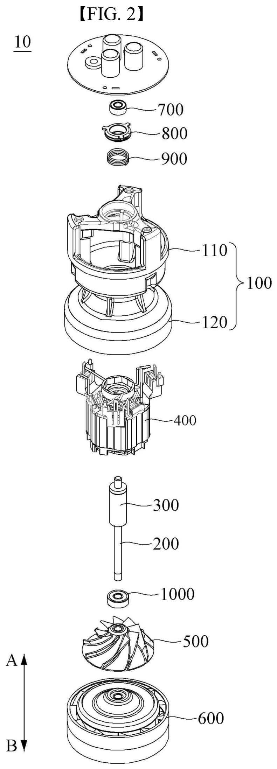

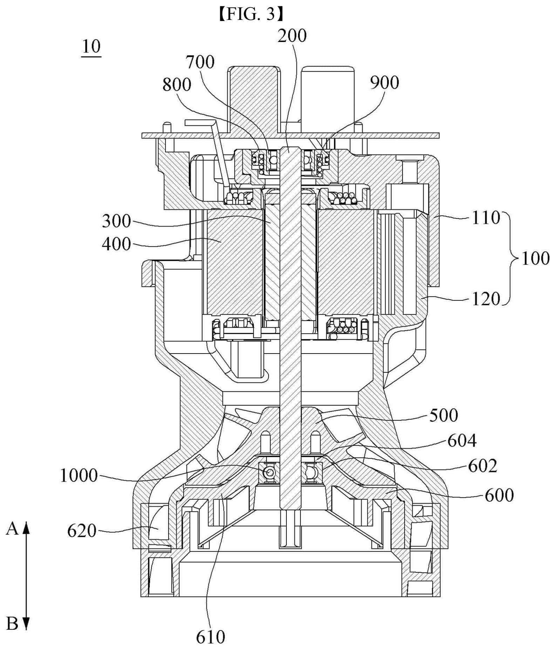

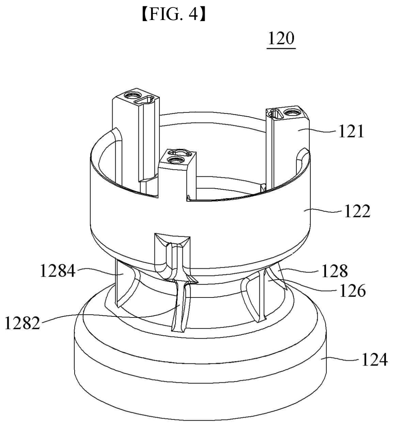

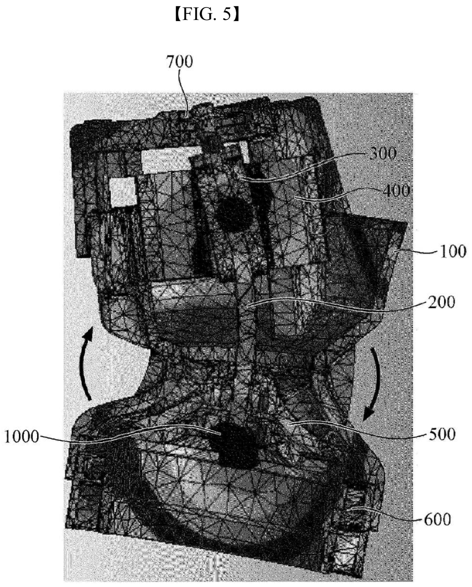

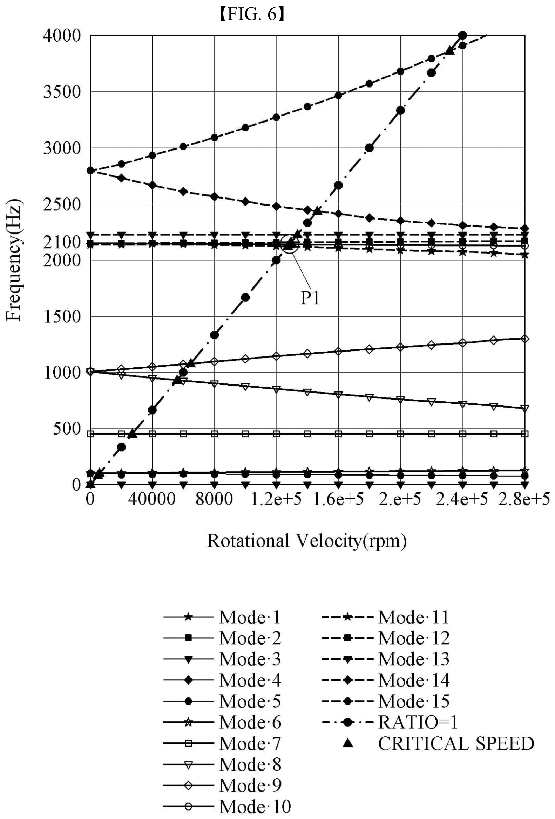

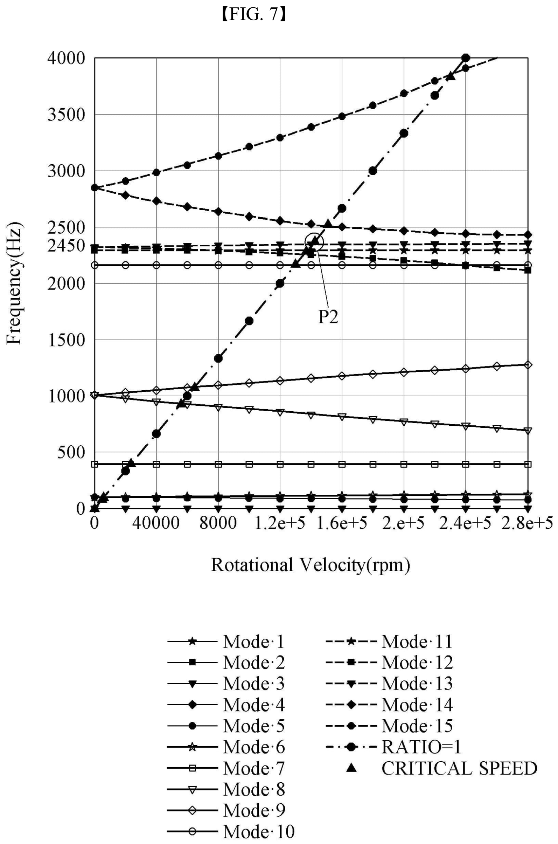

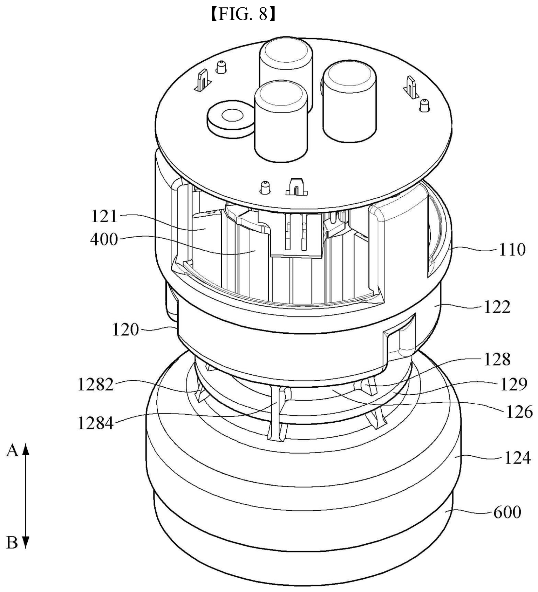

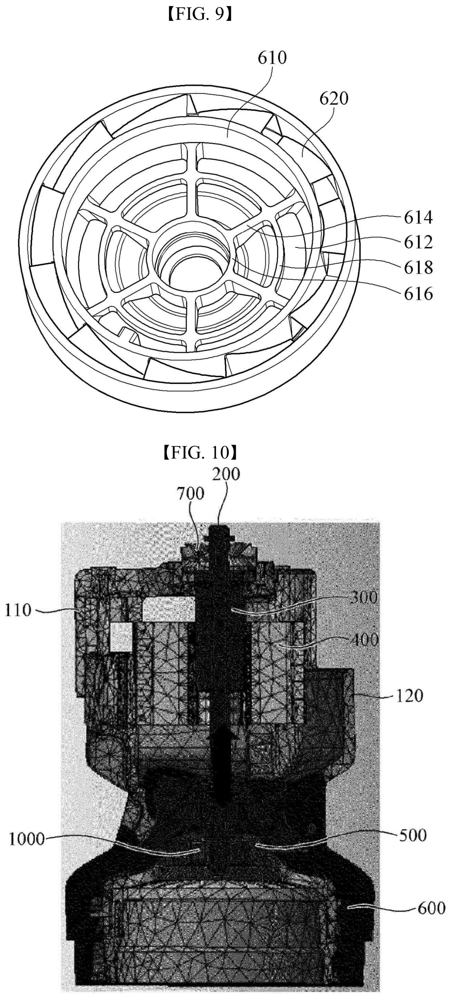

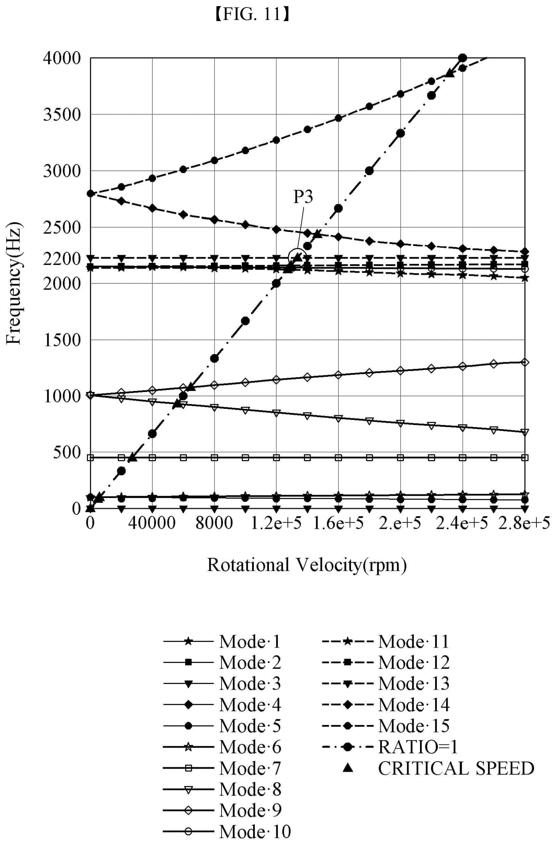

FIG. 1 is a perspective view of a motor according to an embodiment of the present disclosure. FIG. 2 is an exploded perspective view of the motor according to an embodiment of the present disclosure. FIG. 3 is a cross-sectional view of the motor according to an embodiment of the present disclosure. FIG. 4 is a perspective view of a second housing of the motor according to an embodiment of the present disclosure. FIG. 5 is a diagram illustrating a bending mode of a housing of the motor according to an embodiment of the present disclosure. FIG. 6 is a diagram illustrating a frequency of the housing according to a rotational speed of an impeller when there is no rib. FIG. 7 is a diagram illustrating the frequency of the housing according to the rotational speed of the impeller according to an embodiment of the present disclosure. FIG. 8 is a perspective view of a modified example of the motor according to an embodiment of the present disclosure. FIG. 9 is a perspective view of a diffuser of the motor according to an embodiment of the present disclosure. FIG. 10 is a diagram illustrating an axial excitation mode of the housing of the motor according to an embodiment of the present disclosure. FIG. 11 is a diagram illustrating the frequency of the housing according to the rotational speed of the impeller according to an embodiment of the present disclosure.

Referring to FIGS. 1 to 4, a motor 10 according to an embodiment of the present disclosure may include a housing 100, a rotational shaft 200, a rotor 300, a stator assembly 400, an impeller 500, a diffuser 600, a first bearing 700, a bearing holder 800, an elastic member 900, and a second bearing 1000. However, some of these components may be excluded, and other additional components are not excluded.

The motor 10 may be a suction motor used in a cleaner. The motor 10 may generate a suction force to cause external dust to flow into the cleaner. Detailed components of the motor 10 may be placed to form a reverse flow path with respect to the rotational shaft 200. Specifically, the impeller 500 may be placed downstream of a flow path generated according to rotation of the impeller 500 coupled to the rotation shaft 200. In other words, air outside the motor 10 is sucked into the motor 10 according to the rotation of the impeller 500, and a flow path through which air flows inside the motor 10 may be formed while sequentially passing through the first housing 110, the stator assembly 400, the impeller 500, and the diffuser 600. As a result, a heat dissipation effect on heat generated due to an electromagnetic interaction between the rotor 300 and the stator assembly 400 may be enhanced compared to a motor placed in a forward flow path.

The housing 100 may include a first housing 110 and a second housing 120. In an embodiment of the present disclosure, it is described as an example that the first housing 110 and the second housing 120 are separately coupled, but the present disclosure is not limited thereto, and the first housing 110 may be integrally formed with the second housing 120.

The first housing 110 may include a bearing housing in which the bearing holder 800 is placed, and a plurality of leg portions extending axially downward in a radial outer region of the bearing housing. The plurality of leg portions may be spaced apart from each other in a circumferential direction. The leg portion of the first housing 110 may be coupled to the second housing 120. Here, a bearing housing may be referred to as an upper region of the first housing 110.

The first housing 110 may include a first support portion extending radially inward in a lower region of an inner peripheral surface facing the first bearing 700, and a step portion formed between the first support portion 116 and the inner peripheral surface.

In an embodiment of the present disclosure, an upper portion or above in the axial direction refers to direction "A" with reference to FIGS. 1 to 3, and a lower portion or below in the axial direction refers to direction "B" with reference to FIG. 4.

The second housing 120 may be coupled to the first housing 110. The second housing 120 may enclose the impeller 500. The second housing 120 may be formed in a mortar shape. The second housing 120 may include an upper region 122 coupled to the first housing 110, and a lower region 124 that encloses the impeller 500 and has an inner diameter which upward axially.

An outer diameter of the lower portion of the upper region 122 of the second housing 120 may decrease downward axially. An outer diameter of the upper portion of the lower region 124 of the second housing 120 may decrease upward axially.

The second housing 120 may include a coupling portion 121 that extends upward axially in the upper region 122, and is coupled to the first housing 110. The coupling portion 121 may be coupled to the leg portion of the first housing 110. The coupling portion 121 may include a plurality of coupling portions 121 that are spaced apart from each other in the circumferential direction.

The rotational shaft 200 may be rotatably coupled to the first housing 110. The rotational shaft 200 may be rotatably coupled to the first housing 110 through the first bearing 700. The rotational shaft 200 may extend in a vertical direction. The rotational shaft 200 may be formed in a cylindrical shape. The rotational shaft 200 may rotate in one direction or the other direction by rotation of the rotor 300. The rotational shaft 200 may be rotatably coupled to the diffuser 600. The rotational shaft 200 may be rotatably coupled to the diffuser 600 through the second bearing 1000.

The rotor 300 may be coupled to the rotational shaft 200. The rotor 300 may be placed axially below the first bearing 700. The rotor 300 may be placed radially inward of the stator assembly 400. The rotor 300 may face the stator assembly 400. The rotor 300 may rotate in one direction or the other direction by the electromagnetic interaction with the stator assembly 400.

The stator assembly 400 may be coupled to the housing 100. The stator assembly 400 may be coupled to the first housing 110 and/or the second housing 120. The stator assembly 400 may be placed in an internal space created by the first housing 110 and the second housing 120. The stator assembly 400 may be placed radially outward of the rotor 300. The stator assembly 400 may include a stator core facing the rotor 300, a coil wound around the stator core, and an insulator surrounding the stator core and formed of an insulating material.

The impeller 500 may be coupled to the rotational shaft 200. The impeller 500 may rotate in one direction or the other direction according to rotation of the rotational shaft 200. The impeller 500 may be placed below the rotor 300. The impeller 500 may be placed between the stator assembly 400 and the second bearing 1100. The impeller 500 may have a smaller diameter toward an upper portion in the axial direction. The impeller 500 may be formed in a centrally opened conical shape as a whole. A plurality of impeller blades projected outward in the radial direction and spaced apart from each other in the circumferential direction may be formed on a radial outer surface of the impeller 500.

The diffuser 600 may be coupled to the second housing 120. The diffuser 600 may be placed axially below the impeller 500. The rotational shaft 200 may be rotatably coupled to the diffuser 600.

The diffuser 600 may include a second bearing 1000, a body 610 coupled to the rotational shaft 200, and a plurality of guide vanes 620 that are formed on an outer peripheral surface of the body 610 and are spaced apart from each other in the circumferential direction. Through the guide vanes 620, efficiency of air flow by the impeller 500 may be enhanced.

The first bearing 700 may be coupled to the first housing 110. The first bearing 700 may be coupled to an upper region of the first housing 110. The first bearing 700 may be coupled to a bearing holder 800 that is coupled to a central region of a bearing housing of the first housing 110. The first bearing 700 may rotatably couple the rotational shaft 200 to the first housing 110.

An inner ring of the first bearing 700 may be coupled to an outer peripheral surface of the rotational shaft 200. An outer ring of the first bearing 700 may be supported by the first housing 110 through the bearing holder 800. The outer ring of the first bearing 700 may be supported by the bearing holder 800. An outer peripheral surface of the outer ring of the first bearing 700 may be supported by an inner peripheral surface of the bearing holder 800, and a lower surface of the outer ring of the first bearing 700 may be in contact with an upper surface of a first horizontal portion of the bearing holder 800.

The bearing holder 800 may be placed between the first bearing 700 and the first housing 110 in a direction perpendicular to the axial direction, in a horizontal direction, or in a radial direction.

The bearing holder 800 may include a first horizontal portion that supports a lower surface of the outer ring of the first bearing 700, a first vertical portion that extends upward in an axial direction in a radial outer region of the first horizontal portion, and is in contact with an outer surface of the outer ring of the first bearing 700, a second horizontal portion that extends outward in a radial direction in an axial upper region of the first vertical portion, and a second vertical portion that extends downward in an axial direction in a radial outer side of the second horizontal portion.

The elastic member 900 may be placed between a lower surface of the second horizontal portion and an upper surface of the first support portion extending radially inward on a lower portion of the inner peripheral surface of the first housing 110. An outer surface of the second vertical portion may face the inner peripheral surface of the first housing 110.

The elastic member 900 may be placed between the bearing holder 800 and the first housing 110 in the axial direction. The elastic member 900 may be formed of a material having elasticity. The elastic member 900 may be a coil spring. The elastic member 900 may extend in the circumferential direction. An upper surface of the elastic member 900 may be supported by a lower surface of the second horizontal portion of the bearing holder 800, and a lower surface of the elastic member 900 may be supported by an upper surface of the first support portion of the first housing 110.

Through the bearing holder 800 and the elastic member 900, it is possible to vertically move the first bearing 700, the rotational shaft 200, and the second bearing 1000 in a state in which an outward preload is formed on the first bearing 700 and the second bearing 1000 at both sides in the axial direction. Accordingly, since an accurate gap between the second housing 120 and the impeller 500 may be set, reliability may be ensured.

Since the elastic member 900 extends in the circumferential direction, the first bearing 700 and the rotational shaft 200 are located at a center in the radial direction with respect to the first housing 110. That is, in a state in which a balance of the rotor 300 is maintained, an alignment between the first bearing 700, and the second bearing 1000 is maintained due to an arching effect of the elastic member 900, and thus service lives of the bearings 700 and 1000 increase.

The second bearing 1000 may be coupled to a central region of the diffuser 600. The rotational shaft 200 may be rotatably coupled to the second bearing 1000. The second bearing 1000 may rotatably couple the rotational shaft 200 to the diffuser 600.

An inner ring of the second bearing 1000 may be coupled to the outer peripheral surface of the rotational shaft 200. An upper surface of an outer ring of the second bearing 1000 may be supported by the diffuser 600. Specifically, the outer ring of the second bearing 1000 may be coupled to an inner peripheral surface 602 of the diffuser 600, and the upper surface of the outer ring of the second bearing 1000 may be in contact with a lower surface of the second support portion 604 that extends radially inward in an upper region of the inner peripheral surface 602 of the diffuser 600.

Referring to FIGS. 4, 8, and 9, the second housing 120 and the diffuser 600 may include a plurality of ribs 128, 129, 614, 616, and 618. This will be specifically described.

Referring to FIG. 4, the second housing 120 may include a first housing rib 128. The first housing rib 128 may be projected radially outward in the lower portion of the upper region 120 and the upper portion of the lower region 124 of the second housing 120. Here, a region where the lower portion of the upper region 120 and the upper portion of the lower region 124 are connected may be referred to as a connection region 126.

An outer surface of the first housing rib 128 may be placed radially inward of an outermost surface of the second housing 120. The first housing rib 128 may include a plurality of first housing ribs 128 that are spaced apart from each other in the circumferential direction.

The first housing rib 128 may include a vertical rib 1284 of which outer surface extends in an axial direction or a vertical direction. The outer surface of the vertical rib 1284 may be parallel to the rotational shaft 200. The vertical rib 1284 may include a plurality of vertical ribs 1284 that are spaced apart from each other in the circumferential direction.

The first housing rib 128 may include an inclination rib 1282 that is formed in a region overlapped with the coupling portion 121 in the axial direction or vertical direction. An outer surface of the inclination rib 1282 may be inclined to be placed at a radial outer side downward axially. The inclination rib 1282 may include a plurality of inclination ribs 1282 that are spaced apart from each other in the circumferential direction.

The vertical rib 1284 and the inclination rib 1282 may be located alternately with each other in the circumferential direction.

Referring to FIG. 5, it can be seen that, when the motor 10 operates, bending of the second housing 120 occurs due to a mortar shape of the second housing 120 while the rotational shaft 200, the rotor 300, and the impeller 500 rotate. Specifically, when the rotation shaft 200 rotates at a high speed, a region where the first housing 110 is located based on the axial direction generates less radial vibration due to the support of the first bearing 700. On the other hand, a region where the impeller 500 is located generates severe radial vibration due to a centrifugal force. As a result, it can be seen that the connection region 126 of the second housing 120 is formed in a structure with a narrow radial width, that is, a so-called neck-like structure, and a distortion phenomenon of bending in the radial direction occurs.

Referring to FIG. 6, in a general motor without a housing rib, a change in the frequency of the housing according to the rotational speed of the impeller may be seen. In this case, it can be seen that a resonance point P1 of a bending mode of the housing 100, which occurs due to the shape of the housing when the rotational shaft 200 rotates, is formed at 2100 Hz.

Referring to FIG. 7, when the motor 10 according to an embodiment of the present disclosure operates, a change in the frequency of the second housing 120 according to the rotational speed of the impeller 500 may be seen. In this case, it can be seen that a resonance point P2 of a bending mode of the second housing 120, which occurs due to the shape of the second housing 120 when the rotational shaft 200 rotates, moves at 2450 Hz. That is, when the first housing rib 128 is present, the resonant point of the bending mode of the second housing 120 may be moved to increase the critical value of the dangerous speed of the motor 10. Further, rigidity of the second housing 120 may be enhanced, and a vibration amount of the second housing 120 may be reduced.

Referring to FIG. 8, the second housing 120 may include a second housing rib 129. The second housing rib 129 may extend in the circumferential direction. The second housing rib 129 may connect a plurality of first housing ribs 128. The second housing rib 129 may be placed radially inward of a radial outermost surface of the second housing 120. The rigidity of the second housing 120 may be further enhanced through the second housing rib 129.

Referring to FIG. 9, the diffuser 600 may include a first diffuser rib 614, a second diffuser rib 616, and a third diffuser rib 618. The first diffuser rib 614, the second diffuser rib 616, and the third diffuser rib 618 may extend downward on a lower surface 612 of a body 610 of the diffuser 600.

The first diffuser rib 614 may extend in the radial direction. The first diffuser rib 614 may include a plurality of first diffuser ribs 614 that are spaced apart from each other in the circumferential direction. A height of a radial inner region of the first diffuser rib 614 may be larger than a height of a radial outer region. A lower surface of the first diffuser rib 614 may be perpendicular to the rotational shaft 200.

The second diffuser rib 616 may extend in the circumferential direction. The second diffuser rib 616 may connect radial inner ends of the plurality of first diffuser ribs 614.

The third diffuser rib 618 may extend in the circumferential direction. The third diffuser rib 618 may connect the plurality of first diffuser ribs 614. The third diffuser rib 618 may be spaced apart from the second diffuser rib 616 in the radial direction. The third diffuser rib 618 may be placed radially outward of the second diffuser rib 616.

Referring to FIG. 10, it can be seen that, when the motor 10 operates, axial vibration is generated in the second housing 120 while the rotational shaft 200, the rotor 300, and the impeller 500 rotate.

Referring to FIG. 11, when the motor 10 according to an embodiment of the present disclosure operates, a change in the frequency of the second housing 120 according to the rotational speed of the impeller 500 may be seen.

In this case, it can be seen that an axial excitation mode resonance point P3 of the second housing 120 is present at 2200 Hz. That is, when the first diffuser rib 614, the second diffuser rib 616, and the third diffuser rib 618 are present, a resonant point of an axial excitation mode may be moved to increase the critical value of the dangerous speed of the motor 10. In addition, the rigidity of the diffuser 600 is increased, and the axial vibration of the rotational shaft 200 connected to the diffuser 600 is reduced, thereby reducing vibration noise.

While the embodiments of the present disclosure have been described above with reference to the accompanying drawings, it will be understood by those skilled in the art that the present disclosure may be embodied in other specific forms without departing from the spirit or essential characteristics thereof. Therefore, it should be understood that the embodiments described above are illustrative and non-restrictive in every aspect.

## Claims

1. A motor comprising:
a housing;
a first bearing coupled to the housing;
a rotational shaft rotatably coupled to the first bearing;
a rotor coupled to the rotational shaft and placed axially below the first bearing;
a stator assembly placed at a radial outer side of the rotor;
an impeller coupled to the rotational shaft and placed axially below the rotor;
a diffuser coupled to the housing and placed axially below the impeller;
a second bearing, which is coupled to a central region of the diffuser and to which the rotational shaft is rotatably coupled;
a bearing holder placed between the first bearing and the housing in a direction perpendicular to an axial direction; and
an elastic member placed between the bearing holder and the housing in the axial direction,
wherein the diffuser includes a plurality of diffuser ribs that extend downward on a lower surface.

2. The motor of claim 1, wherein the impeller is located downstream of a flow path generated by rotation of the impeller.

3. The motor of claim 1, wherein the plurality of diffuser ribs include a plurality of first diffuser ribs that extend in a radial direction and are spaced apart from each other in a circumferential direction.

4. The motor of claim 3, wherein a height of a radial inner region of the first diffuser rib is larger than a height of a radial outer region.

5. The motor of claim 3, wherein a lower surface of the first diffuser rib is perpendicular to the rotational shaft.

6. The motor of claim 3, wherein the plurality of diffuser ribs include second diffuser ribs that extend in the circumferential direction and connect radial inner ends of the plurality of first diffuser ribs.

7. The motor of claim 6, wherein the plurality of diffuser ribs include third diffuser ribs that extend in the circumferential direction and connect the plurality of first diffuser ribs, and
wherein the third diffuser rib is spaced apart from the second diffuser rib in the radial direction.

8. The motor of claim 1, wherein the housing includes a first housing, and a second housing enclosing the impeller and coupled to the first housing,
wherein the second housing includes an upper region, and a lower region placed axially below the upper region,
wherein a lower portion of the upper region has an outer diameter which decreases downward in the axial direction, and
wherein an upper portion of the lower region has an outer diameter which decreases upward in the axial direction.

9. The motor of claim 8, further comprising:
a plurality of first housing ribs that are projected radially outward in the lower portion of the upper region and the upper portion of the lower region, and are spaced apart from each other in the circumferential direction.

10. The motor of claim 9, wherein the plurality of first housing ribs include vertical ribs of which outer surfaces are parallel to the rotational shaft.

11. The motor of claim 9, wherein the second housing includes a coupling portion that extends axially upward in the upper region and is coupled to the first housing, and
wherein the plurality of first housing ribs include inclination ribs formed in a region overlapped with the coupling portion in the axial direction.

12. The motor of claim 11, wherein an outer surface of the inclination rib is inclined to be placed at a radial outer side downward axially.

13. The motor of claim 9, wherein an outer surface of the first housing rib is placed radially inward of an outermost surface of the second housing.

14. The motor of claim 9, further comprising:
second housing ribs that extend in the circumferential direction and connect the plurality of first housing ribs.

15. A motor comprising:
a first housing;
a first bearing coupled to the first housing;
a rotational shaft rotatably coupled to the first bearing;
a rotor coupled to the rotational shaft and placed axially below the first bearing;
a stator assembly placed at a radial outer side of the rotor;
an impeller coupled to the rotational shaft and placed axially below the rotor;
a second housing enclosing the impeller and coupled to the first housing;
a diffuser coupled to the second housing and placed axially below the impeller;
a second bearing, which is coupled to a central region of the diffuser and to which the rotational shaft is rotatably coupled;
a bearing holder placed between the first bearing and the first housing;
an elastic member placed between the bearing holder and the first housing in an axial direction; and
a plurality of housing ribs that are projected radially outward on an outer surface of the second housing,
wherein the second housing includes an upper region, and a lower region placed axially below the upper region,
wherein a lower portion of the upper region has an outer diameter which decreases downward in the axial direction,
wherein an upper portion of the lower region has an outer diameter which decreases upward in the axial direction, and
wherein the plurality of housing ribs are placed in the lower portion of the upper region and the upper portion of the lower region.

16. The motor of claim 15, wherein the plurality of housing ribs include a plurality of first housing ribs that are spaced apart from each other in a circumferential direction.

17. The motor of claim 16, wherein the plurality of first housing ribs include vertical ribs of which outer surfaces are parallel to the rotational shaft.

18. The motor of claim 16, wherein the second housing includes a coupling portion that extends axially upward in the upper region and is coupled to the first housing, and
wherein the plurality of first housing ribs include inclination ribs formed in a region overlapped with the coupling portion in the axial direction.

19. The motor of claim 18, wherein an outer surface of the inclination rib is inclined to be placed at a radial outer side downward axially.

20. The motor of claim 16, wherein the plurality of housing ribs further include second housing ribs that extend in the circumferential direction and connect the plurality of first housing ribs.
